# EUROPÄISCHE PATENTANMELDUNG

(11) **EP 1 863 237 A1**
(43) Veröffentlichungstag der Anmeldung: **05.12.2007**
(21) Anmeldenummer: 07108113.7
(22) Anmeldetag: 14.05.2007
(51) Int. Cl.: H04L 12/56, H04L 12/28, H04L 29/06

(54) **Einrichtung und Verfahren zur Übertragung von Daten innerhalb wenigstens eines Kommunikationsnetzes**

(30) Priorität: 31.05.2006 DE 102006025414
(71) Anmelder: Vodafone Holding GmbH, 40213 Düsseldorf (DE)
(72) Erfinder: Dr. Ing. Alger, Michael, 85540, Haar (DE)
(74) Vertreter: Müller, Thomas

(57) **Zusammenfassung**

Die Erfindung betrifft eine Einrichtung zur Übertragung von Daten innerhalb wenigstens eines Kommunikationsnetzes, mit einem 3G-Modul für Sprach- und schnelle Datenverbindungen und mit einem 2G-Modul für Sprach- und/oder Faxverbindungen. Erfindungsgemäß ist vorgesehen, dass die Einrichtung eine Steuereinrichtung aufweist und dass die Steuereinrichtung ein Schalterelement zur wahlweisen Abführung der Daten über das 3G-Modul oder das 2G-Modul steuert. Weiterhin wird ein entsprechendes Verfahren zur Übertragung von Daten innerhalb wenigstens eines Kommunikationsnetzes beschrieben.

## Beschreibung

Die vorliegende Erfindung betrifft zunächst eine Einrichtung zur Übertragung von Daten innerhalb wenigstens eines Kommunikationsnetzes gemäß dem Oberbegriff von Patentanspruch 1. Weiterhin betrifft die Erfindung ein Verfahren zur Übertragung von Daten innerhalb wenigstens eines Kommunikationsnetzes gemäß dem Oberbegriff von Patentanspruch 9.

In den letzten Jahren haben die Möglichkeiten, innerhalb verschiedener Kommunikationsnetzwerke zu kommunizieren, immer mehr zugenommen. Insbesondere ist ein stetiger Anstieg immer neuer Kommunikationsmöglichkeiten und Möglichkeiten des Datenaustauschs zu verzeichnen. So existiert beispielsweise die herkömmliche Festnetztelefonie parallel zum Telefonieren über Mobilfunknetze, dem Datenaustausch über das Internet, dem Empfang von Broadcastdaten, und dergleichen. Zusätzlich ist zu beobachten, dass die einzelnen Kommunikationsarten immer mehr vernetzt werden. Heutzutage finden derartige Vernetzungen bereits zunehmend auch in privaten Haushalten statt.

Dabei ist es erforderlich, eine Lenkung des vorherrschenden Verkehrs vorzunehmen. Bei im allgemeinen Stand der Technik bekannten Lösungen erfolgt die Verkehrslenkung aus dem Netz heraus. Hierbei werden ab einer einstellbaren Zelllast (die niedriger als die so genannte "Admission Control Schwelle" ist) neue Sprachverbindungen automatisch an ein 2G-Modul verwiesen. Der Wechsel erfolgt beispielsweise über einen so genannten "Directed Entry", der blind, das heißt ohne vorherige Messung, in der 2G Zelle, oder bei einem "Handover" zwischen zwei Zellen. Nachteilig bei dieser Lösung ist, dass keine Verkehrssenkung erfolgen kann.

Weiterhin können die vorhandenen Netzkapazitäten nur unzureichend genutzt werden. Die Verkehrslenkung muss netzbasiert erfolgen. Das bedeutet, dass die Verkehrslenkung infrastrukturabhängig ist und dass hohe Investitionen erforderlich sind. Weiterhin ist die bekannte Lösung bei der Einführung neuer Funktechniken (wie beispielsweise UMTS 900, RAN-Evolution, WiMax oder dergleichen nicht flexibel.

Der vorliegenden Erfindung liegt daher die Aufgabe zugrunde, eine Einrichtung zur Kommunikation innerhalb wenigstens eines Kommunikationsnetzwerks bereitzustellen, mittels derer eine wie oben beschrieben Vernetzung auf einfache Weise problemlos möglich ist, ohne dass die vorstehend beschriebenen Nachteile auftreten.

Diese Aufgabe wird durch die Einrichtung mit den Merkmalen gemäß dem unabhängigen Patentanspruch 1 sowie durch das Verfahren mit den Merkmalen gemäß dem unabhängigen Patentanspruch 9 gelöst. Weitere Merkmale und Details der vorliegenden Erfindung ergeben sich aus den Unteransprüchen sowie der Beschreibung. Merkmale und Details, die im Zusammenhang mit der erfindungsgemäßen Einrichtung beschrieben sind, gelten dabei selbstverständlich auch im Zusammenhang mit dem erfindungsgemäßen Verfahren, so dass das zur Einrichtung Gesagte wechselweise auch im Zusammenhang mit dem Verfahren gilt, und jeweils umgekehrt.

Gemäß dem ersten Aspekt der Erfindung wird eine Einrichtung zur Übertragung von Daten innerhalb wenigstens eines Kommunikationsnetzes bereitgestellt, mit einem 3G-Modul für Sprach- und schnelle Datenverbindungen und mit einem 2G-Modul für Sprach- und/oder Faxverbindungen. Die Einrichtung ist erfindungsgemäß dadurch gekennzeichnet, dass diese nunmehr eine Steuereinrichtung aufweist und dass die Steuereinrichtung ein Schalterelement zur wahlweisen Abführung der Daten über das 3G-Modul oder das 2G-Modul steuert.

Die erfindungsgemäße Einrichtung stellt eine weitergehende Optimierung der in der noch nicht veröffentlichten Europäischen Patentanmeldung 06 004 631.5 der Anmelderin beschriebenen Kommunikationseinrichtung dar, deren Offenbarungsgehalt insoweit in die Beschreibung der vorliegenden Erfindung mit einbezogen wird.

Erfindungsgemäß wird eine Einrichtung zur Übertragung von Daten innerhalb wenigstens eines Kommunikationsnetzwerks bereitgestellt, die zunächst durch eine Schnittstelle zu einer schnellen Sprach- und Datenverbindung sowie eine Schnittstelle zu einer Sprach- und /oder Faxverbindung gekennzeichnet ist. Dazu weist die Einrichtung ein 3G-Modul für Sprach- und schnelle Datenverbindungen auf, wobei das 3G-Modul vorteilhaft wenigstens einen Anschluss für ein Datenübertragungsgerät aufweist. Weiterhin weist die Einrichtung ein 2G-Modul für Sprach- und/oder Faxverbindungen auf, wobei das 2G-Modul vorteilhaft wenigstens einen Anschluss für ein entsprechendes Telekommunikationsgerät aufweist. Über das G2-Modul kann beispielsweise wenigstens ein Telefongerät, etwa ein analoges Telefongerät, und/oder wenigstens ein Faxgerät und/oder wenigstens ein Sprachrekorder an der Einrichtung angeschlossen werden. Das 2G-Modul unterstützt vorteilhaft 2 Telekommunikationsleitungen (ein Telefon, ein Fax). Beispielsweise können auch zwei analoge Anschlüsse für Sprache und ein analoger Anschluss für Fax unterstützt werden.

Vorteilhaft können noch Mittel zur Verwendung beider Verbindungen zur gleichen Zeit vorgesehen sein. Bei diesen Mitteln handelt es sich vorteilhaft um geeignete Programmmittel, die in der Einrichtung implementiert sind. Alternativ oder zusätzlich können diese Mittel auch durch elektronische Schaltungen, beispielsweise Controller oder dergleichen, realisiert werden.

Im Folgenden wird die erfindungsgemäße Lösung auch als "Surf&Talk" bezeichnet. Allgemein gesprochen stellt "Surf&Talk" ein Konzept dar, um eine Festleitungs-Zugangs-Substitution auf der Basis einer spezifischen Einrichtung vorzunehmen, die im weiteren Verlauf der Beschreibung auch als Surf&Talk-Box bezeichnet wird. Um diese Aufgabe zu lösen (insbesondere Schaffung einer In-Haus Vernetzungsmöglichkeit, die äquivalent oder besser ist verglichen mit einer analogen und ISDN Festleitungs-Vernetzungsnöglichkeit), muss die Box eine schnelle Datenverbindung (beispielsweise UMTS) und die Möglichkeit bereitstellen, entweder eine Sprach- oder Faxverbindung zur selben Zeit (äquivalent zu 2 FL (Festleitung) mit ISDN) zu verwenden. Ein weiterer vorteilhafter, optionaler Bestandteil ist die Möglichkeit, PCs über einen besonderen Anschluss, beispielsweise via Ethernet und/oder WLAN, zu verbinden.

Gemäß einer ersten Ausführungsform wird die Funktionalität technisch durch eine Box mit 2 separaten Modems bereitgestellt. Sprach- und Faxverbindungen werden über ein 2G-Modem (2G-Modul) gehandhabt, mit der Möglichkeit, ein analoges Faxgerät, analoge Telefonapparate und einen Sprachrekorder zu verbinden - vorzugsweise jeden an einen definierten Anschluss. Datenverbindungen werden über ein 3G-Modem (3G-Modul) gehandhabt, welches optional mit einem WLAN-Zugangspunkt und/oder einem Ethernet-Umschalter verbunden ist. Vorteilhaft können das 2G-Modem und das 3G-Modem parallel und gleichzeitig verwendet werden.

In weiterer Ausgestaltung kann die Einrichtung vorteilhaft ein 3G-Modul mit einer Prozessoreinheit, insbesondere einem Chipsatz, für alle Arten der Verbindungen aufweisen. Gemäß einer solchen zweiten Ausführungsform, die durch die vorliegende Offenbarung abgedeckt ist, wird diese Funktionalität bereitgestellt durch ein 3G-Modul mit einem kombinierten Chipsatz für alle Arten von Verbindungsmöglichkeiten. Die Basisfunktionalität ist dieselbe wie bei der ersten Ausführungsform.

Erfindungsgemäß ist nunmehr vorgesehen, dass die Einrichtung zusätzlich eine Steuereinrichtung aufweist. Die Steuereinrichtung steuert ein Schalterelement zur wahlweisen Abführung der Daten über das 3G-Modul oder das 2G-Modul.

Die vorliegende Erfindung stellt somit eine Erweiterung der in der Europäischen Patentanmeldung 06 004 631.5 offenbarten Kommunikationseinrichtung dar, welche beispielsweise Anschlüsse für analoge Telefon/Fax-Geräte und Personal Computer (etwa über WLAN, Ethernet oder USB) ermöglicht, und welche beispielsweise über UMTS oder GSM an das Telefonnetz und das Internet angebunden sein kann. Nunmehr ist auch möglich, Daten, beispielsweise Sprachverkehr, dynamisch über verschiedene Netze abzuführen.

Ein Festnetzersatz war bisher beispielsweise nur bei optimaler Verkehrslenkung des stationären Mobilfunkverkehrs kostenoptimal. Wenn nunmehr beispielsweise die Kapazität eines GSM-Netzes besetzt ist, kann zur Vermeidung von Engpässen oder erforderlichen Kapazitätserweiterungen im Netz beispielsweise der Sprachverkehr über das 3G-Netz oder über verfügbare andere Netze (zum Beispiel WLAN, WiMax oder dergleichen) abgeführt werden, und umgekehrt. Die Entscheidung kann im Endgerät individuell und im Betrieb zeitlich veränderlich getroffen werden.

Die erfindungsgemäße Lösung gestattet insbesondere eine betriebsoptimierte Verbindung vorhandener Endgeräte für Telefonie und Internet, ohne auf einen Festnetzanschluss angewiesen zu sein.

Ein Endgerät enthält heute häufig einen WLAN-Router, einen GSM-Bestandteil und einen UMTS-Bestandteil. Heute wird der Sprachverkehr in einem solchen Fall über GSM abgeführt. Der Datenverkehr erfolgt über 3G und der WLAN-Router wird als Access-Punkt genutzt, ohne Verbindung zu in Reichweite befindlichen Hotspots. Die Einrichtung enthält nun ein Schalterelement, welches insbesondere softwarebasiert ist, das beispielsweise den Sprachverkehr wahlweise auch über einen 3G-Sprachkanal leitet.

Vorteilhaft ist die Steuereinrichtung zur automatischen Steuerung des Schalterelements ausgebildet, wenn die Netzauslastung des dem 2G-Modul oder 3G-Modul zugrunde liegenden Kommunikationsnetzes einen vorgegebenen Schwellwert überschreitet. Dies wird im Zusammenhang mit dem erfindungsgemäßen Verfahren noch näher erläutert.

Vorzugsweise kann die Einrichtung ein WLAN-Modul aufweisen. Ein solches WLAN-Modul kann beispielsweise genutzt werden, wenn es alternativ zur bisherigen Konfiguration als Access-Punkt auch als Teilnehmer betrieben werden kann. Falls in Reichweite der Einrichtung ein WLAN-Netz zur Verfügung steht, welches den Zugang zum Internet ermöglicht, kann der WLAN-Router den Verkehr über diesen Zugang abführen.

Vorteilhaft ist das 2G-Modul als GSM-Modul oder GPRS-Modul ausgebildet ist. In weiterer Ausgestaltung kann das 3G-Modul als HSDPA-Modul (High Speed Downlink Packet Access) oder als UMTS-Modul ausgebildet sein, das heißt fähig für eine Datenübertragung mit UMTS-Geschwindigkeit.

In weiterer Ausgestaltung können das 2G-Modul und das 3G-Modul jeweils eine Schnittstelle zu einem Sprachkanal aufweisen, wobei die Steuereinrichtung das Schalterelement zur wahlweisen Abführung der Daten über den Sprachkanal des 3G-Moduls und/oder den Sprachkanal des 2G-Moduls steuert. Alternativ oder zusätzlich können das 2G-Modul und das 3G-Modul jeweils eine Schnittstelle zu einem Datenkanal aufweisen, wobei die Steuereinrichtung das Schalterelement zur wahlweisen Abführung der Daten über den Datenkanal des 3G-Moduls und/oder den Datenkanal des 2G-Moduls steuert.

Vorzugsweise weist die Einrichtung eine Codec-Einrichtung zum Umwandeln von Daten eines ersten Datenformats in Daten eines zweiten Datenformats auf. Unter einer Codec-Einrichtung wird generell eine Einrichtung verstanden, mittels derer Daten oder Signale digital codiert und decodiert werden. Mit einer Codec-Einrichtung, bei der es sich vorteilhaft um Programmmittel handelt, können Daten eines Formats in ein anderes Datenformat umgewandelt werden. Beispielsweise kann ein VOIP-Codec (Voice over lP) vorgesehen sein, so dass der Datenverkehr, beispielsweise der Sprachverkehr, bei Bedarf auch über einen 3G-Datenkanal, über HSDPA, über GPRS oder über das WLAN-Modul abgeführt werden kann. Vorteilhaft ist die Codec-Einrichtung zur Abführung von Sprachverkehr über einen Datenkanal ausgebildet.

In weiterer Ausgestaltung kann vorgesehen sein, dass die Steuereinrichtung fernsteuerbar ausgebildet ist. Damit kann bei Bedarf auch die weiter oben erwähnte infrastrukturgestützte Variante der Verkehrslenkung das Endgerät direkt beeinflussen.

In weiterer Ausgestaltung kann die Einrichtung wenigstens einen Anschluss für einen externen Computer aufweisen. Dabei ist die Erfindung nicht auf eine bestimmte Anzahl von Anschlüssen, oder aber bestimmte Typen von Anschlüssen, beschränkt. Vorteilhaft kann wenigstens ein Anschluss als Ethernet-Anschluss und/oder als WLAN-Zugangspunkt ausgebildet sein.

Vorzugsweise kann die Einrichtung wenigstens einen Drucker-Server und wenigstens einen Anschluss für einen Drucker aufweisen.

Vorteilhaft kann die Einrichtung auch wenigstens einen Anschluss für eine externe Antenne aufweisen.

Besonders vorteilhaft ist, wenn die einzelnen Komponenten der Einrichtung über ein internes Datennetzwerk miteinander verbunden sind.

In weiterer Ausgestaltung kann die Einrichtung Mittel zum zumindest einmaligen Authentifizieren eines Nutzers bei Benutzung der Einrichtung aufweisen. Auf der Kundenseite ist beispielsweise keinerlei Konfiguration erforderlich, um die Box in Betrieb zu bringen. Wenn diese eingeschaltet wird, kann die Box beispielsweise einmal die PIN für 2G (Telefongerät) und 3G (Web Schnittstelle) abfragen und automatisch die Verbindung zum geeigneten Netzwerk herstellen. Der Kunde kann sein analoges Telefongerät und/oder Faxgerät ohne irgendwelche Änderungen an der Box nutzen. Er kann seine(n) Computer via Ethernet und/oder WLAN verbinden und das Surfen beginnen.

Vorteilhaft kann die Einrichtung Aktivierungsmittel zum automatischen Aktivieren aller Funktionalitäten der Einrichtung nach Einschalten der Einrichtung aufweisen. Auf diese Weise kann die Einrichtung nach dem so genannten "Plug and Play"-Prinzip betrieben werden. Das bedeutet, dass die Einrichtung nach dem Einschalten selbständig - vorzugsweise komplett - hochfahren kann. Nach dem Einschalten werden sich dann die Funktionalitäten - vorzugsweise alle Funktionalitäten - der Einrichtung automatisch und ohne manuelle Eingriffe des Nutzers aktivieren. Dazu können die Mittel in Form von Programmmitteln und/oder in Form von elektronischen Schaltungen beziehungsweise Schaltungskomponenten ausgebildet sein.

Gemäß dem zweiten Aspekt der Erfindung wird ein Verfahren zur Übertragung von Daten innerhalb wenigstens eines Kommunikationsnetzes bereitgestellt, bei dem die Daten über ein 3G-Modul für Sprach- und schnelle Datenverbindungen und über ein 2G-Modul für Sprach- und/oder Faxverbindungen übertragen werden. Das Verfahren ist erfindungsgemäß dadurch gekennzeichnet, dass über eine Steuereinrichtung einer Einrichtung zur Übertragung von Daten ein Schalterelement zur wahlweisen Abführung der Daten über das 3G-Modul und/oder das 2G-Modul gesteuert wird.

Zu den Vorteilen, Wirkungen sowie zur Funktionsweise des erfindungsgemäßen Verfahrens, das bevorzugt mittels einer wie vorstehend beschriebenen erfindungsgemäßen Einrichtung durchgeführt werden kann, wird auch auf die vorstehenden Ausführungen zur erfindungsgemäßen Einrichtung vollinhaltlich Bezug genommen und hiermit verwiesen.

Vorteilhaft wird das Schalterelement über die Steuereinrichtung automatisch gesteuert, wenn die jeweilige Netzauslastung des dem 2G-Modul oder 3G-Modul zugrunde liegenden Kommunikationsnetzes einen vorgegebenen Schwellwert überschreitet.

Die Ansteuerung mittels der der Steuereinrichtung basiert vorteilhaft auf der Messung der verfügbaren Datenrate einer 3G-Verbindung. Ist diese Datenrate gering, so wird auf eine hohe Netzlast im 3G-Teil geschlossen und der Verkehr beispielsweise über das GSM-Netz geleitet. Weitere, vom Endgerät messbare Kriterien zur Ermittlung der lokalen, aktuellen Netzlast, wie etwa die Anzahl der freien Zeitschlitze im GSM-Netz oder dergleichen, können zur Entscheidung herangezogen werden. Wesentlich ist jedoch, dass das Endgerät weitgehend selbständig agiert.

Vorteilhaft können das 2G-Modul und das 3G-Modul jeweils eine Schnittstelle zu einem Sprachkanal aufweisen, wobei das Schalterelement über die Steuereinrichtung zur wahlweisen Abführung der Daten über den Sprachkanal des 3G-Moduls und/oder den Sprachkanal des 2G-Moduls gesteuert wird. Alternativ oder zusätzlich können das 2G-Modul und das 3G-Modul jeweils eine Schnittstelle zu einem Datenkanal aufweisen, wobei das Schalterelement über die Steuereinrichtung zur wahlweisen Abführung der Daten über den Datenkanal des 3G-Moduls und/oder den Datenkanal des 2G-Moduls gesteuert wird.

Vorzugsweise können über eine Codec-Einrichtung Daten eines ersten Datenformats in Daten eines zweiten Datenformats zur Abführung von Sprachverkehr über einen Datenkanal umgewandelt werden.

## Patentansprüche

1. Einrichtung zur Übertragung von Daten innerhalb wenigstens eines Kommunikationsnetzes, mit einem 3G-Modul für Sprach- und schnelle Datenverbindungen und mit einem 2G-Modul für Sprach- und/oder Faxverbindungen, **dadurch gekennzeichnet, dass** die Einrichtung eine Steuereinrichtung aufweist und dass die Steuereinrichtung ein Schalterelement zur wahlweisen Abführung der Daten über das 3G-Modul oder das 2G-Modul steuert.

2. Einrichtung nach Anspruch 1, **dadurch gekennzeichnet, dass** die Steuereinrichtung zur automatischen Steuerung des Schalterelements ausgebildet ist, wenn die Netzauslastung des dem 2G-Modul oder 3G-Modul zugrunde liegenden Kommunikationsnetzes einen vorgegebenen Schwellwert überschreitet.

3. Einrichtung nach Anspruch 1 oder 2, **dadurch gekennzeichnet, dass** diese ein WLAN-Modul aufweist.

4. Einrichtung nach einem der Ansprüche 1 bis 3, **dadurch gekennzeichnet, dass** das 2G-Modul als GSM-Modul oder GPRS-Modul ausgebildet ist.

5. Einrichtung nach einem der Ansprüche 1 bis 4, **dadurch gekennzeichnet, dass** das 3G-Modul als UMTS-Modul oder HSDPA-Modul ausgebildet ist.

6. Einrichtung nach einem der Ansprüche 1 bis 5, **dadurch gekennzeichnet, dass** das 2G-Modul und das 3G-Modul jeweils eine Schnittstelle zu einem Sprachkanal aufweisen und dass die Steuereinrichtung das Schalterelement zur wahlweisen Abführung der Daten über den Sprachkanal des 3G-Moduls und/oder den Sprachkanal des 2G-Moduls steuert.

7. Einrichtung nach einem der Ansprüche 1 bis 6, **dadurch gekennzeichnet, dass** das 2G-Modul und das 3G-Modul jeweils eine Schnittstelle zu einem Datenkanal aufweisen und dass die Steuereinrichtung das Schalterelement zur wahlweisen Abführung der Daten über den Datenkanal des 3G-Moduls und/oder den Datenkanal des 2G-Moduls steuert.

8. Einrichtung nach einem der Ansprüche 1 bis 7, **dadurch gekennzeichnet, dass** diese eine Codec-Einrichtung zum Umwandeln von Daten eines ersten Datenformats in Daten eines zweiten Datenformats aufweist.

9. Verfahren zur Übertragung von Daten innerhalb wenigstens eines Kommunikationsnetzes, bei dem die Daten über ein 3G-Modul für Sprach- und schnelle Datenverbindungen und über ein 2G-Modul für Sprach- und/oder Faxverbindungen übertragen werden, **dadurch gekennzeichnet, dass** über eine Steuereinrichtung einer Einrichtung zur Übertragung von Daten ein Schalterelement zur wahlweisen Abführung der Daten über das 3G-Modul und/oder das 2G-Modul gesteuert wird.

10. Verfahren nach Anspruch 9, **dadurch gekennzeichnet, dass** das Schalterelement über die Steuereinrichtung automatisch gesteuert wird, wenn die jeweilige Netzauslastung des dem 2G-Modul oder 3G-Modul zugrunde liegenden Kommunikationsnetzes einen vorgegebenen Schwellwert überschreitet.

11. Verfahren nach einem der Ansprüche 9 oder 10, **dadurch gekennzeichnet, dass** das 2G-Modul und das 3G-Modul jeweils eine Schnittstelle zu einem Sprachkanal aufweisen und dass das Schalterelement über die Steuereinrichtung zur wahlweisen Abführung der Daten über den Sprachkanal des 3G-Moduls und/oder den Sprachkanal des 2G-Moduls gesteuert wird.

12. Verfahren nach einem der Ansprüche 9 bis 11, **dadurch gekennzeichnet, dass** das 2G-Modul und das 3G-Modul jeweils eine Schnittstelle zu einem Datenkanal aufweisen und dass das Schalterelement über die Steuereinrichtung zur wahlweisen Abführung der Daten über den Datenkanal des 3G-Moduls und/oder den Datenkanal des 2G-Moduls gesteuert wird.

13. Verfahren nach einem der Ansprüche 9 bis 12, **dadurch gekennzeichnet, dass** über eine Codec-Einrichtung Daten eines ersten Datenformats in Daten eines zweiten Datenformats zur Abführung von Sprachverkehr über einen Datenkanal umgewandelt werden.
